# EUROPÄISCHE PATENTANMELDUNG

(11) **EP 3 995 440 A1**
(43) Veröffentlichungstag der Anmeldung: **11.05.2022**
(21) Anmeldenummer: 21206433.1
(22) Anmeldetag: 04.11.2021
(51) Int. Cl.: B67C 3/02, B67C 3/04

(54) **FÜLLORGAN UND VORRICHTUNG ZUM BEFÜLLEN EINES BEHÄLTERS MIT EINEM FÜLLPRODUKT**

(30) Priorität: 04.11.2020 DE 102020129102
(71) Anmelder: KRONES AG, 93073 Neutraubling (DE)
(72) Erfinder: Neuber, Andreas, 93073 Neutraubling (DE); Poeschl, Stefan, 93073 Neutraubling (DE); Wimmer, Jakob, 93073 Neutraubling (DE)
(74) Vertreter: Nordmeyer, Philipp Werner

(57) **Zusammenfassung**

Füllorgan (10) und Vorrichtung zum Befüllen eines Behälters mit einem Füllprodukt, vorzugsweise in einer Getränkeabfüllanlage, wobei das Füllorgan (10) aufweist: einen ersten Produktweg (W1) mit einem ersten Produktanschluss (31) zur Anbindung an eine erste Produktzuleitung (131), einem ersten Produktauslauf (53a) zum Einleiten des Füllprodukts in den Behälter und einer ersten Produktleitung (34), die den ersten Produktanschluss (31) und den ersten Produktauslauf (53a) in Fluidkommunikation versetzt; einen zweiten Produktweg (W2) mit einem zweiten Produktanschluss (32) zur Anbindung an eine zweite Produktzuleitung (132), einem zweiten Produktauslauf (53b) zum Einleiten des Füllprodukts in den Behälter und einer zweiten Produktleitung (35), die den zweiten Produktanschluss (32) und den zweiten Produktauslauf (53b) in Fluidkommunikation versetzt; wobei der erste Produktweg (W1) eingerichtet ist, um das Füllprodukt über den ersten Produktauslauf (53a) in einem ersten Füllproduktstrahl in den Behälter einzuleiten, und der zweite Produktweg (W2) eingerichtet ist, um das Füllprodukt über den zweiten Produktauslauf (53b) in einem zweiten Füllproduktstrahl, der sich vom ersten Füllproduktstrahl unterscheidet, in den Behälter einzuleiten.

## Beschreibung

### Technisches Gebiet

Die vorliegende Erfindung betrifft ein Füllorgan sowie eine Vorrichtung zum Befüllen eines Behälters mit einem Füllprodukt, vorzugsweise zu Verwendung in einer Getränkeabfüllanlage.

### Stand der Technik

In der Fluidabfüllung im Lebensmittelbereich sind Füllventile unterschiedlicher Bauart bekannt. Hierbei wird zwischen den grundlegenden Produktarten nicht-karbonisierter (stiller) und karbonisierter (CSD) Flüssigkeiten unterschieden. Im Fall nicht-karbonisierter Produkte, wie beispielsweise bei der Abfüllung von stillem Wasser, Saft usw., wird die Flüssigkeit üblicherweise in einem Freistrahl in den Behälter gefüllt. Im Unterschied dazu wird bei der Abfüllung karbonisierter Produkte, wie beispielsweise Bier, Sprudelwasser, Softdrinks usw., die Flüssigkeit üblicherweise an der Behälterinnenwand entlang in den Behälter geleitet, um ein Ausgasen und Schaumbildung zu vermindern.

Im Folgenden werden beide Abfüllprozesse zusammen mit dem grundlegenden Aufbau der jeweiligen Füllventile, beginnend mit der Freistrahlabfüllung stiller Produkte, genauer beschrieben:
Bei der Freistrahlabfüllung ist das Füllventil produktgefüllt, und das Öffnen/Schließen des Ventils wird über einen Ventilkegel am Füllventilausgang realisiert. Der zu befüllende Behälter wird berührungsfrei in einem definierten Abstand unter dem Füllventil positioniert. Für den Start des Füllvorgangs wird der Ventilkegel angehoben, und das Produkt fließt über strömungstechnisch optimierte Konturen in einem möglichst laminaren Strom durch den entstandenen Ringspalt im Freistrahl aus dem Füllventil in den Behälter.

Bei der Abfüllung karbonisierter Produkte ist das Füllventil ebenfalls produktgefüllt. Wie eingangs erwähnt, werden karbonisierte Produkte über die Behälterinnenwand in den Behälter geleitet, um ein Ausgasen und Schaumbildung zu vermindern. Aus dem gleichen Grund wird der Behälter im Rahmen des sogenannten Gegendruckverfahrens unter Überdruck gesetzt, damit das CO₂ in der flüssigen Phase gebunden bleibt. Hierzu wird der Behälter an das Füllventil gasdicht angepresst und vordem Füllstart mit einem Spanngas, beispielsweise CO₂, vorgespannt. Nach dem Vorspannen beginnt die Abfüllung. Anstatt eines Ventilkegels wie im Fall der Freistrahlabfüllung übernimmt die Funktion des Öffnens/Schließens des Ventils ein Drallkörper, der darüber hinaus die strömende Flüssigkeit in Rotation versetzt. Wird der Drallkörper angehoben, fließt das Produkt über eine strömungstechnisch optimierte Kontur für die Wandabfüllung durch den Ringspalt in den angepressten Behälter. Durch die Fliehkräfte der Rotation wird die Flüssigkeit nach außen getrieben und fließt dann an der Behälterinnenwand entlang, weshalb diese Art der Abfüllung auch als "Wandabfüllung" bezeichnet wird. Gleichzeitig kann das Gas im Behälter über eine Bohrung in dem Drallkörper und einer daran angebundenen Ventilstange entweichen. Bei Füllende wird der Ringspalt geschlossen, indem der Drallkörper gegen die Auslaufkontur gepresst wird, der Behälter auf Umgebungsdruck entlastet und anschließend vom Füllventil getrennt.

Die strömungstechnisch optimalen Auslaufkonturen für die Freistrahl- und Wandabfüllung sind sehr unterschiedlich, da im einen Fall ein laminarer, tendenziell enger Füllstrahl und im anderen Fall ein rotierender, sich aufweitender Füllstrahl zu erzeugen sind. Aus diesem Grund kann ein für die Freistrahlabfüllung entwickeltes Füllventil nicht ohne weiteres für die Wandabfüllung verwendet werden, und umgekehrt. Insbesondere ist es nicht möglich, im Freistrahlventil bereits vor dem Ventilkegel eine Rotation des Füllprodukts zu erzeugen und dieses über die Freistrahlauslaufkontur in gewünschter Weise auszuleiten. Um für jeden Prozess eine optimale Auslaufkontur generieren zu können, ist daher eine räumliche Trennung der beiden Konturen nötig.

Prinzipiell ist es möglich, sowohl nicht-karbonisierte als auch karbonisierte Produkte mit einem Füllventil entweder für die Freistrahlabfüllung oder die Wandabfüllung abzufüllen. Allerdings wird in diesem Fall zumindest eine Produktart nicht optimal abgefüllt. Eine Kombination der jeweils optimalen Füllprozesse ist so nicht möglich. Zudem ist je Füller, d.h. je Abfüllanlage, zumeist nur ein Prozess implementiert. Werden karbonisierte Produkte im Freistrahl abgefüllt, so kann nur eine geringere Abfüllgeschwindigkeit im Vergleich zur Wandabfüllung realisiert werden. Andererseits ist im Fall der Wandabfüllung eine aseptische Abfüllung nicht-karbonisierter Produkte nicht ohne weiteres möglich.

### Darstellung der Erfindung

Eine Aufgabe der Erfindung daher besteht darin, das Befüllen von Behältern mit einem Füllprodukt zu verbessern, insbesondere das Abfüllen in unterschiedlichen Füllarten, vorzugsweise das Freistrahlabfüllen und das Wandabfüllen, maschinenbaulich zu vereinfachen.

Die Aufgabe wird durch ein Füllorgan mit den Merkmalen des Anspruchs 1 sowie eine Vorrichtung mit den Merkmalen des Anspruchs 14 gelöst. Vorteilhafte Weiterbildungen folgen aus den Unteransprüchen, der folgenden Darstellung der Erfindung sowie der Beschreibung bevorzugter Ausführungsbeispiele.

Das Füllorgan und die Vorrichtung gemäß der Erfindung dienen dem Befüllen von Behältern mit einem Füllprodukt. Als abzufüllende Produkte kommen insbesondere Getränke, beispielsweise Wasser (still oder karbonisiert), Softdrinks, Smoothies, Milchprodukte, Bier, Wein, Mischgetränke und dergleichen in Betracht.

Das Füllorgan umfasst einen ersten Produktweg mit einem ersten Produktanschluss zur Anbindung an eine erste Produktzuleitung, einem ersten Produktauslauf zum Einleiten des Füllprodukts in den Behälter und einer ersten Produktleitung, die den ersten Produktanschluss und den ersten Produktauslauf in Fluidkommunikation versetzt. Das Füllorgan umfasst ferner einen zweiten Produktweg mit einem zweiten Produktanschluss zur Anbindung an eine zweite Produktzuleitung, einem zweiten Produktauslauf zum Einleiten des Füllprodukts in den Behälter und einer zweiten Produktleitung, die den zweiten Produktanschluss und den zweiten Produktauslauf in Fluidkommunikation versetzt.

Der erste Produktweg ist eingerichtet, um das Füllprodukt über den ersten Produktauslauf in einem ersten Füllproduktstrahl in den Behälter einzuleiten, und der zweite Produktweg ist eingerichtet, um das Füllprodukt über den zweiten Produktauslauf in einem zweiten Füllproduktstrahl, der sich vom ersten Füllproduktstrahl unterscheidet, in den Behälter einzuleiten. In anderen Worten, die Beschaffenheit, wie beispielsweise Geometrie, Bündelung, Laminarität, Rotation usw., des in den Behälter geleiteten Füllproduktstrahls des ersten Produktwegs unterscheidet sich von der Beschaffenheit des in den Behälter geleiteten Füllproduktstrahls des zweiten Produktwegs.

Auf diese Weise können mit ein- und demselben Füllorgan baulich kompakt unterschiedliche Abfüllarten realisiert werden, ohne qualitätsmindernde Kompromisse eingehen zu müssen. Besonders im Fall geringer Abfüllmengen müssen nun nicht länger mehrere Abfüllanlagen für unterschiedlich abzufüllende Füllprodukte, wie etwa karbonisierte und nicht-karbonisierte Füllprodukte, vorgehalten werden, wodurch sich Ressourcen und Kosten einsparen lassen. Der Produktwechsel ist schnell und einfach durchführbar. Somit kann die Produktion schnell auf Kundenwünsche oder eine Änderung der Marktlage reagieren.

Besonders bevorzugt ist der erste Produktweg für eine Freistrahlabfüllung und/oder der zweite Produktweg für eine Wandabfüllung eingerichtet. Die Bezeichnungen "Freistrahlabfüllung" und "Wandabfüllung" sind auf dem technischen Gebiet bekannt und üblich: Bei der Freistrahlabfüllung wird der Behälter zumeist berührungsfrei in einem definierten Abstand unter dem Füllorgan positioniert, und das Füllprodukt fließt in einem möglichst laminaren, geometrisch definierten Strom aus dem entsprechenden Produktauslauf des Füllorgans in den Behälter. Bei der Wandabfüllung wird die Behältermündung mit einem Mündungsabschnitt des Füllorgans in Kontakt gebracht, beispielsweise gasdicht angepresst, und das Füllprodukt wird bei der Abfüllung, herkömmlich mittels eines Drallkörpers, in Rotation versetzt, wodurch die Fliehkräfte das Füllprodukt nach außen treiben und das Füllprodukt an der Behälterinnenwand entlangströmt. Die Freistrahlabfüllung ist für nicht-karbonisierte Füllprodukte und/oder aseptische Abfüllungen besonders geeignet, während die Wandabfüllung zumeist zum Abfüllen karbonisierter Füllprodukte eingesetzt wird, um ein Ausgasen und Schaumbildung zu vermindern.

Vorzugsweise weist das Füllorgan zumindest einen Gaskanal auf, der für eine Zuleitung eines Spanngases in den Behälter und/oder eine Ableitung eines Gases aus dem Behälter eingerichtet ist. Über die Gasleitung kann beispielsweise Rückgas, welches während der Befüllung des Behälters verdrängt wird, abgeleitet werden. Alternativ oder zusätzlich kann die Gasleitung zur Entspannung, d.h. einen Druckausgleich, des Behälters im Fall eines Gegendruck- oder Unterdruckverfahrens fungieren. So kann die Gasleitung mehrere Funktionen erfüllen, oder es können mehrere Gasleitungen, beispielsweise in einer Rohr-in-Rohr-Konstruktion, vorgesehen sein.

Vorzugsweise umfasst der erste Produktweg einen beweglichen Ventilkegel sowie einen mit diesem zusammenwirkenden Ventilsitz in der ersten Produktleitung, wobei der Ventilkegel so über einen Aktuator mit dem Ventilsitz in Kontakt bringbar (beispielsweise auf den Ventilsitz absenkbar) und von diesem entfernbar (beispielsweise aus dem Ventilsitz abhebbar) ist, dass der erste Produktauslauf dadurch entsprechend geschlossen oder geöffnet werden kann. Auf diese Weise kann über den ersten Produktweg auf baulich einfache und zuverlässige Weise ein Freistrahl erzeugt werden. Zu diesem Zweck können der Ventilkegel, Ventilsitz, die erste Produktleitung und der erste Produktauslauf strömungstechnisch optimierte Konturen aufweisen, um einen bestmöglichen laminaren Freistrahl zu erzeugen.

Vorzugsweise verläuft der Gaskanal durch den Ventilkegel und eine etwaige Ventilstange, die den Ventilkegel mit dem Aktuator verbindet, wodurch die oben genannten Gasfunktionen, die in erster Linie für die Wandabfüllung relevant sind, und die technischen Mittel zur Freistrahlabfüllung baulich synergetisch kombiniert werden können, ohne dass Kompromisse bei der Qualität der beiden Füllmodi eingegangen werden müssen.

Vorzugsweise hat die erste Produktleitung eine zylindrische Form, wobei die zweite Produktleitung radial außerhalb der ersten Produktleitung verläuft. Die erste Produktleitung wird beispielsweise durch den Innenraum eines zylindrischen Gehäuses des Füllorgans gebildet. Die räumliche Trennung der produktberührten Bereiche für die beiden Füllmodi, insbesondere die Freistrahl- und die Wandabfüllung, ermöglicht die Verwendung jeweils optimaler Geometrien. Indem die zweite Produktleitung radial außen verläuft, vorzugsweise zumindest abschnittsweise konzentrisch zur ersten Produktleitung, kann der entsprechende in den Behälter gerichtet Produktstrom leicht in Rotation versetzt werden, ohne dass die Erzeugung eines inneren, laminaren Freistrahls durch den ersten Produktweg erschwert wird.

Aus dem gleichen Grund wird vorzugsweise der zweite Produktauslauf durch einen Ringspalt gebildet, der den ersten Produktauslauf, vorzugsweise ebenfalls ein Ringspalt, radial und/oder konzentrisch umgibt.

Vorzugsweise umfasst der zweite Produktweg eine Drallkontur, so dass das Füllprodukt beim Einleiten in den Behälter in Rotation versetzt wird. Die Rotationsachse entspricht hierbei der in den Behälter gerichteten Strahlrichtung, die wiederum normalerweise mit der Schwerkraftrichtung übereinstimmt. Das Füllorgan hat zumeist eine längliche, zylindrische Form, wodurch es eine Längsrichtung definiert. Das Füllorgan wird üblicherweise vertikal installiert, wodurch die Längsrichtung mit der Schwerkraftrichtung zusammenfällt. Somit haben räumliche Bezeichnungen wie etwa "oben", "unten", "oberhalb", "unterhalb" und dergleichen eine klare Bedeutung.

Vorzugsweise umfasst die zweite Produktleitung mehrere Mantelkanäle, die radial außerhalb der ersten Produktleitung verlaufen und vorzugsweise von einem gemeinsamen Abschnitt der Produktleitung abzweigen. In anderen Worten, gemäß dieser Ausführungsvariante teilt sich die zweite Produktleitung stromabwärts des zweiten Produktanschlusses in mehrere, vorzugsweise zunächst zwei, Kanäle, die deshalb als "Mantelkanäle" bezeichnet sind, weil sie die erste Produktleitung an der Mantelfläche beziehungsweise im Mantelbereich zumindest abschnittsweise umgeben. Durch eine solche Teilung der zweiten Produktleitung kann der Produktstrom des zweiten Produktwegs vergleichmäßigt und geeignet modelliert werden.

Besonders bevorzugt teilt sich die zweite Produktleitung zunächst in zwei Mantelkanäle, die sich wiederum weiter stromabwärts, beispielsweise ungefähr auf halber Strecke, in je zwei weitere Mantelkanäle aufteilen. Auf diese Weise können bei strömungstechnischer Optimierung gleichlange Wegestrecken der einzelnen Mantelkanäle sichergestellt werden, was die Gefahr einer Strähnenbildung und eines sich ungleichmäßig ausbildenden Schirmes vermindert. Außerdem ist der Querschnitt der einzelnen Kanäle bevorzugt so ausgeführt, dass eine homogene Produktverteilung entlang der Wegstrecke weiter begünstigt wird.

Vorzugsweise stehen die erste und zweite Produktleitung nicht miteinander in Fluidkommunikation. In anderen Worten, zumindest zwischen den Produktanschlüssen und Produktausläufen findet in diesem Fall kein Fluidaustausch zwischen den beiden Produktwegen statt, so dass der in den Behälter gerichtete Produktstrahl gemäß den beiden Füllmodi kompromisslos modelliert werden kann.

Vorzugsweise weist das Füllorgan ein Gehäuse zur Aufnahme des ersten Produktwegs und des zweiten Produktwegs auf. Das Gehäuse ist vorzugsweise von zylindrischer Form, wobei hierbei keine Einschränkung auf einen perfekten Kreiszylinder zu sehen ist, denn diese kann beispielsweise durch Anschlüsse, Anbauten, Flansche, Befestigungsmittel und dergleichen gebrochen werden. Der zweite Produktweg, insbesondere die zweite Produktleitung, verläuft vorzugsweise zumindest abschnittsweise in einer Gehäusewand des Gehäuses, an der Gehäusewand oder wird durch die Gehäusewand gebildet. Der zweite Produktweg und dessen etwaige Mantelkanäle sind somit zumindest abschnittsweise in das Gehäuse integriert beziehungsweise darin eingebettet, wodurch auf baulich kompakte Weise eine räumliche Trennung der produktberührten Bereiche für die beiden Füllmodi erreicht wird.

Vorzugsweise wird das Gehäuse, sowie die Kanalstruktur zumindest des zweiten Produktwegs, zumindest abschnittsweise durch ein 3D-Druckverfahren, vorzugsweise ein selektives Laserschmelzverfahren, hergestellt, wodurch komplexe Kanalstrukturen realisierbar sind, die durch herkömmliche subtraktive Verfahren wie Drehen, Fräsen oder Laserschneiden nicht oder nur schwer erzeugt werden können.

Vorzugsweise umfasst das Gehäuse einen oberen Ventilabschnitt, einen Flanschabschnitt und einen unteren Ventilabschnitt, wobei der obere Ventilabschnitt und der untere Ventilabschnitt durch ein 3D-Druckverfahren, etwa ein selektives Laserschmelzverfahren, hergestellt sowie beidseitig auf den Flanschabschnitt additiv aufgebaut werden. Das additive Fertigungsverfahren ist aufgrund der Komplexität der hierin erwünschten Kanalgeometrien nützlich, da eine Gesamtherstellung des Füllorgans mit konventionellen Methoden nicht oder nur mit hohem Aufwand möglich ist. Die Kanäle können strömungstechnisch optimal ausgelegt werden, und es besteht eine maximale Designfreiheit zur Umsetzung konventionell schwer realisierbarer Geometrien. Zudem lässt sich durch die additive beziehungsweise generative Fertigung eine Materialersparnis erzielen, da im Unterschied zu einem subtraktiven Fertigungsverfahren nur benötigtes Material eingesetzt wird. Der Flanschabschnitt kann mit konventionellen Methoden, beispielsweise Drehen, Fräsen, Laserschneiden und dergleichen, gefertigt und somit besonders wirtschaftlich hergestellt werden.

Die oben genannte Aufgabe wird ferner durch eine Vorrichtung zum Befüllen eines Behälters mit einem Füllprodukt, vorzugsweise in einer Getränkeabfüllanlage, gelöst. Die Vorrichtung weist auf: zumindest ein Füllorgan gemäß einer der vorstehend dargelegten Ausführungsvarianten; ein Produktreservoir zur Bereitstellung des Füllprodukts; einen ersten Produktzulauf, der mit dem ersten Produktanschluss des Füllorgans verbunden und eingerichtet ist, um das Füllprodukt aus dem Produktreservoir in den ersten Produktweg einzuleiten; einen zweiten Produktzulauf, der mit dem zweiten Produktanschluss des Füllorgans verbunden und eingerichtet ist, um das Füllprodukt aus dem Produktreservoir in den zweiten Produktweg einzuleiten.

Die Merkmale, technischen Wirkungen, Vorteile sowie Ausführungsbeispiele, die in Bezug auf das Füllorgan beschrieben wurden, gelten analog für die Vorrichtung.

Die Vorrichtung kann als Rundläufer implementiert sein, bei dem mehrere Füllorgane am Außenumfang eines Karussells, das die Füllorgane und die zu befüllenden Behälter während der Befüllung entlang einer Kreisbahn transportiert, installiert sind.

Vorzugsweise umfasst der zweite Produktzulauf zur Manipulation des Füllproduktstroms ein Ventil, insbesondere ein Schaltventil, um die Zuleitung des Füllprodukts in den zweiten Produktweg zubeziehungsweise abzuschalten. Auf diese Weise kann die bauliche Komplexität des Füllorgans geringgehalten werden.

Alternativ oder zusätzlich zur Absperrung des zweiten Produktwegs vor dem Füllorgan (d.h. stromaufwärts des zweiten Produktanschlusses des Füllorgans) kann eine Absperrung oder Regelung des Volumenstroms innerhalb des Füllorgans, beispielsweise am zweiten Produktauslauf erfolgen. Hierzu sind verschiedene Lösungen möglich: So kann die Absperrung am zweiten Produktauslauf mittels Klappen realisiert werden, die bei Füllende vom Gehäuse des Füllorgans eingeklappt werden und den zweiten Produktauslauf verschließen. Alternativ sind auch ein Anpressen einer Dichtfläche gegen den zweiten Produktauslauf oder eine mit einem flexiblen Material ummantelte Zentralblende auf Höhe des zweiten Produktauslaufs realisierbar. Alternativ könnte eine verschiebbare Auslaufhülse die Abdichtung am unteren Ende des Füllorgans übernehmen.

Vorzugsweise ist eine Belüftungsleitung mit einem Belüftungsventil vorgesehen, die von der zweiten Produktzuleitung abzweigt. Bei Füllende kann das Belüftungsventil geöffnet werden, sodass die Kanäle leerlaufen können. Danach kann der Behälter über ein etwaiges Schaltventil auf Umgebungsdruck entspannt und anschließend abtransportiert werden.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Figuren.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine vertikale Schnittansicht eines Füllorgans mit schematisch eingezeichneten Fluidwegen außerhalb des Füllorgans gemäß einem Ausführungsbeispiel;
- Figur 2: eine Seitenansicht des Füllorgans mit angeschlossenen Produktzuleitungen;
- Figur 3: eine Vorderansicht des Füllorgans;
- Figur 4: eine horizontale Schnittansicht des Füllorgans im unteren Bereich;

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanz zu vermeiden.

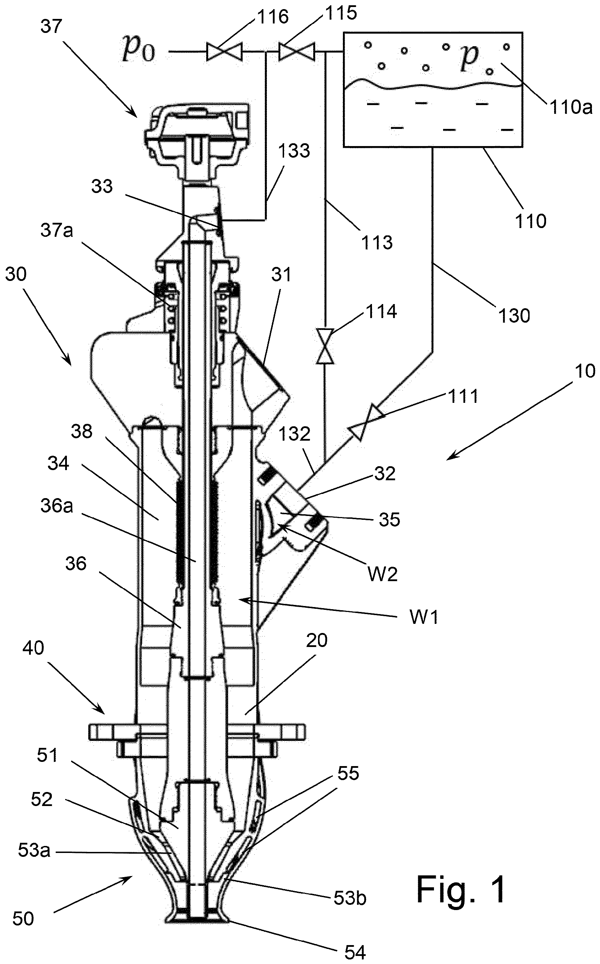

Die Figur 1 ist eine vertikale Schnittansicht eines Füllorgans 10, hierin auch als "Kombiventil" bezeichnet, mit schematisch eingezeichneten Fluidwegen außerhalb des Füllorgans 10 gemäß einem Ausführungsbeispiel. Das Füllorgan 10 dient dem Befüllen eines Behälters (in den Figuren nicht gezeigt) mit einem Füllprodukt, vorzugsweise einem Getränk in einer Getränkeabfüllanlage. Als abzufüllende Füllprodukte kommen beispielsweise Wasser (still oder karbonisiert), Softdrinks, Smoothies, Milchprodukte, Bier, Wein, Mischgetränke und dergleichen in Betracht.

Das Füllorgan 10 weist ein längliches, zylindrisches Gehäuse 20 auf, dessen Haupterstreckung eine Längsrichtung definiert. Die Längsrichtung fällt im eingebauten Zustand normalerweise mit der Schwerkraftrichtung zusammen.

Das Gehäuse 20 kann das Füllorgan 10 in drei Abschnitte, einen oberen Ventilabschnitt 30, einen Flanschabschnitt 40 und einen unteren Ventilabschnitt 50, dies jedoch nur beispielhaft, unterteilen. Diese Dreiteilung des Füllorgans 10 dient im Wesentlichen einer wirtschaftlichen Fertigung des Bauteils. So kann der obere Ventilabschnitt 30 beispielsweise in einem selektiven Laserschmelzverfahren (SLM) oder einem anderen 3D-Druckverfahren hergestellt sowie direkt und nahtlos auf den Flanschabschnitt 40 additiv oder generativ aufgebaut werden. Der Flanschabschnitt 40 kann mit konventionellen Methoden, beispielsweise Drehen, Fräsen, Laserschneiden und dergleichen, gefertigt und somit besonders wirtschaftlich hergestellt werden. Der untere Abschnitt 50 des Füllorgans 10 wird vorzugsweise ebenfalls mit einem additiven Verfahren, speziell einem 3D-Druckverfahren, von der anderen Seite auf den Flanschabschnitt 40 aufgebracht beziehungsweise aufgedruckt, so dass der Flanschabschnitt 40 als Basis oder Anker für die beidseitigen Aufbauten - den oberen Ventilabschnitt 30 und den unteren Ventilabschnitt 50 - fungiert.

Das additive Fertigungsverfahren ist aufgrund der Komplexität der nachstehend beschriebenen Kanalgeometrien nützlich, da eine Gesamtherstellung des Füllorgans 10 mit konventionellen Methoden nicht oder nur mit hohem Aufwand möglich ist. Die Kanäle können strömungstechnisch optimal ausgelegt werden, und es besteht eine maximale Designfreiheit zur Umsetzung konventionell schwer realisierbarer Geometrien. Zudem lässt sich durch die additive beziehungsweise generative Fertigung eine Materialersparnis erzielen, da im Unterschied zu einem subtraktiven Fertigungsverfahren nur benötigtes Material eingesetzt wird.

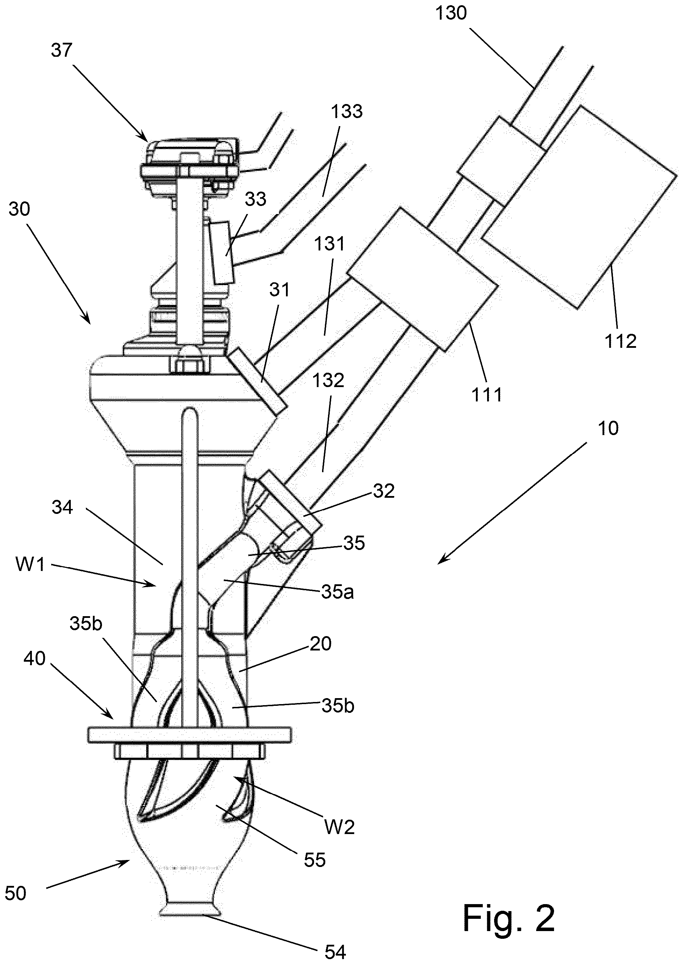

Im oberen Ventilabschnitt 30 sind verschiedene Anschlüsse untergebracht, darunter ein erster Produktanschluss 31 und ein zweiter Produktanschluss 32. Es sei darauf hingewiesen, dass die Bezeichnungen "erster", "zweiter" usw. keine Ordnung oder Reihenfolge vorgeben, sondern lediglich der sprachlichen Unterscheidung dienen. Die beiden Produktanschlüsse 31, 32 sind zum Anschluss an entsprechende Produktzuleitungen 131, 132 (vgl. auch Figur 2) eingerichtet und leiten das Füllprodukt in unterschiedliche Kanäle im Füllorgan 10, wie weiter unten genauer ausgeführt. In der Figur 1 wurde der Übersichtlichkeit halber in der schematischen Darstellung der Fluidwege außerhalb des Füllorgans 10 auf die Darstellung der ersten Produktzuleitung 131 verzichtet. Sie geht jedoch aus der Figur 2 hervor.

Ferner umfasst der obere Ventilabschnitt 30 zumindest einen Gasanschluss 33, der für den Anschluss einer entsprechenden Gasleitung 133 eingerichtet ist. Die Gasleitung 133 dient beispielsweise der Zuleitung eines Vorspanngases und/oder Ableitung von aus dem Behälter verdrängten Rückgas. Zu diesem Zweck kann die Gasleitung 133 zusammen mit dem Gasanschluss 33 und einem sich daran anschließenden Gaskanal 36a mehrere Funktionen erfüllen, eine Rohr-in-Rohr-Konstruktion sein, oder es können mehrere Gasanschlüsse 33 mit Gaskanälen 36a zum Anschluss an entsprechende Gasleitungen vorgesehen sein.

Im oberen Ventilabschnitt 30 befindet sich ferner eine erste Produktleitung 34, die mit dem ersten Produktanschluss 31 in Fluidverbindung steht und im vorliegenden Ausführungsbeispiel ein vom Gehäuse 20 eingefasster Produktraum ist. Außerdem weist der obere Ventilabschnitt 30 eine zweite Produktleitung 35 auf, die mit dem zweiten Produktanschluss 32 in Fluidverbindung steht und sich im vorliegenden Ausführungsbeispiel in mehrere Mantelkanäle 35a, 35b teilt, die im Bereich des Außenumfangs beziehungsweise Zylindermantels des Gehäuses 20 verlaufen.

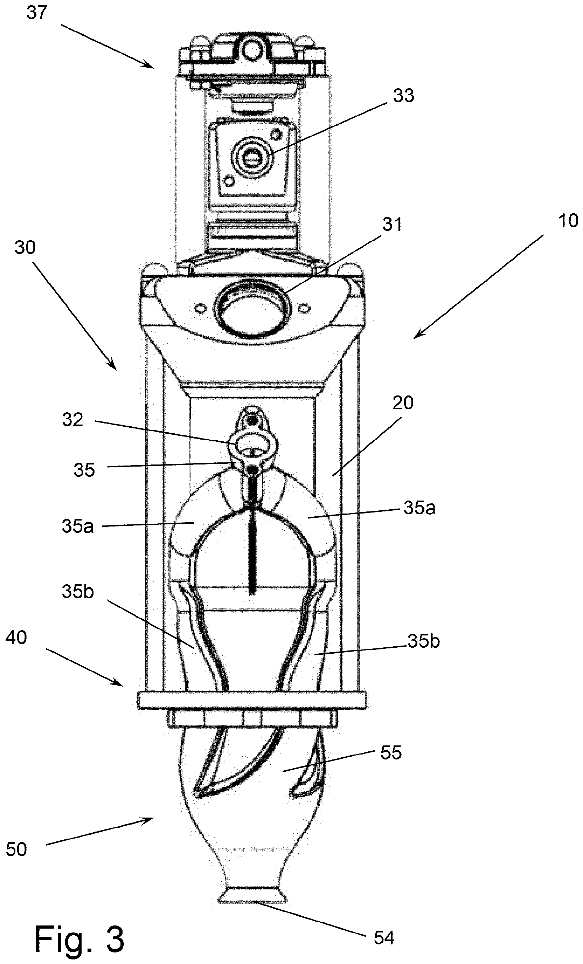

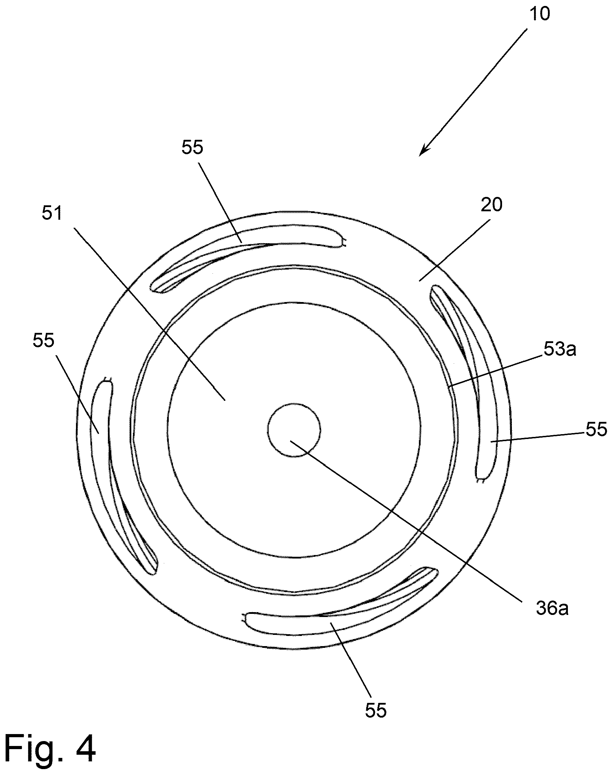

Die Produktleitungen 34, 35, insbesondere die zweite Produktleitung 35, können - wie erwähnt - Verzweigungen aufweisen. Ferner kann deren Gestaltung (Krümmung, Verlauf, Durchmesser, Querschnitt usw.) im Hinblick auf die gewünschten Abfüllmodi, insbesondere Freistrahlabfüllen und Wandabfüllen, optimiert sein. Ein Fluidaustausch zwischen der ersten und der zweiten Produktleitung 34, 35 innerhalb des Füllorgans 10 ist in der Regel nicht vorgesehen, jedoch nicht prinzipiell ausgeschlossen. Eine mögliche Struktur und ein möglicher Verlauf der zweiten Produktleitung 35 mit den Mantelkanälen 35a, 35b geht am besten aus den Figuren 2 und 3 sowie in ihrer Fortführung als Drallkontur 55 im unteren Ventilabschnitt 50 aus dem Querschnitt der Figur 4 hervor.

Eine bevorzugte Mantelkanalgeometrie sieht wie folgt aus: Die Produktleitung 35 teilt sich zunächst in zwei Mantelkanäle 35a auf, wie es am besten aus der Perspektive der Figur 3 hervorgeht. Die Mantelkanäle 35a wiederum teilen sich, vorzugsweise ungefähr in der Mitte, in je zwei weitere Mantelkanäle 35b auf, wie es am besten aus der Perspektive der Figur 2 hervorgeht. Dass das Füllprodukt zunächst in die Mitte geführt wird, ist sinnvoll, um für jeden Mantelkanal 35a gleich große Wegestrecken zu generieren, was die Gefahr einer Strähnenbildung und einer ungleichmäßigen Ausbildung des Schirmes vermindert oder gar gänzlich verhindert. Außerdem ist der Querschnitt der einzelnen Kanäle bevorzugt so ausgeführt, dass eine homogene Produktverteilung entlang der Wegstrecke weiter begünstigt wird. Dies ist im vorliegenden Ausführungsbeispiel dadurch gewährleistet, dass die Summe der einzelnen Querschnittsflächen an allen Stellen sowohl zum Eintritt als auch zum Austritt äquivalent bleibt.

Der obere Ventilabschnitt 30 weist ferner eine Ventilstange 36 auf, die sich zentral und in Längsrichtung durch das Gehäuse 20 erstreckt. Die Ventilstange 36 ist am oberen Ende an einen Aktuator 37 angebunden, der eingerichtet ist, um die Ventilstange 36 und damit einen am unteren Ende befindlichen Ventilkegel 51 heben und zu senken. Der Aktuator 37 kann ein Vorspannmittel 37a, wie beispielsweise eine Spiralfeder, umfassen, das eingerichtet ist, um den Ventilkegel 51 in eine Position, beispielsweise die geschlossene Position, vorzuspannen.

Die Ventilstange 36 umfasst den Gaskanal 36a, der sich vorzugsweise als Bohrung zentral darin und in Längsrichtung erstreckt. Es können auch mehrere Gaskanäle 36a vorgesehen sein, etwa um die Gaszufuhr und Gasabfuhr voneinander zu trennen. In diesem Fall können die Gaskanäle 36a als Rohr-in-Rohr-Konstruktion ausgeführt sein.

Die Abdichtung der Ventilstange 36 und deren translatorische Lagerungen gegenüber dem Innenraum des Gehäuses 20, insbesondere gegenüber der ersten Produktleitung 34, kann über einen Faltenbalg 38 erfolgen.

Der untere Ventilabschnitt 50 ist über den Flanschabschnitt 40 am oberen Ventilabschnitt 30 montiert. Im unteren Ventilabschnitt 50 befindet sich der bereits erwähnte Ventilkegel 51, der so über den Aktuator 37 in einen gehäuseseitigen Ventilsitz 52 abgesenkt und aus diesem heraus bewegt werden kann, dass dadurch ein erster Produktauslauf 53a, der vorzugsweise als Ringspalt ausgebildet ist oder einen solchen umfasst, der ersten Produktleitung 34 geschlossen und geöffnet werden kann.

Der untere Ventilabschnitt 50 umfasst einen Mündungsabschnitt 54, an den der zu befüllende Behälter gasdicht angepresst werden kann. Im Bereich des Mündungsabschnitts 54 befindet sich neben dem ersten Produktauslauf 53a die Drallkontur 55, um das Füllprodukt, das den zweiten Weg nimmt, d.h. durch die zweite Produktleitung 35 transportiert wird, beim Austritt aus dem Füllorgan 10 in Rotation zu versetzen. Die zweite Produktleitung 35, im vorliegenden Ausführungsbeispiel in Form der insgesamt vier Mantelkanäle 35b, versetzt das Füllprodukt über die Drallkontur 55, d.h. definierte Fließkurven in Rotation, bevor es über einen zweiten Produktauslauf 53b, der vorzugsweise als Ringspalt ausgebildet ist oder einen solchen umfasst, in den Mündungsabschnitt 54 geleitet wird.

Sowohl der erste Produktauslauf 53a als auch der zweite Produktauslauf 53b leiten das Füllprodukt in den gemeinsamen Mündungsabschnitt 54. Von dort aus gelangt das Füllprodukt in den unterhalb des Mündungsabschnitts 54 oder mit dem Mündungsabschnitt 54 in Kontakt stehenden Behälter.

Das beschriebene Kombifüllventil vereinigt zwei Füllprozesse, insbesondere eine Freistrahlabfüllung, geeignet besonders für stille Füllprodukte, und eine Wandabfüllung, geeignet besonders für karbonisierte Füllprodukte, in einem einzigen Füllorgan 10, ohne den jeweilig anderen Füllprozess qualitativ zu verschlechtern. Die produktberührte Kontur im Innern des Füllorgans 10, umfassend die erste Produktleitung 34, den Ventilkegel 51, die Ventilstange 36, den Faltenbalg 38, erlaubt die Erzeugung eines ersten Füllstrahls, insbesondere eines Freistrahls, mit dem das Füllprodukt in den Behälter eingeleitet wird. Die produktberührte Kontur im Mantelbereich des Füllorgans 10, umfassend die zweite Produktleitung 35, die Mantelkanäle 35a mit der Drallkontur 55, erlaubt die Erzeugung eines zweiten Füllstrahls, insbesondere eines rotierenden Füllstrahls für die Wandabfüllung, mit dem das Füllprodukt in den Behälter eingeleitet wird. Die Beschaffenheit (Form, Bündelung, Laminarität, Rotation, Strömungsverhalten usw.) des ersten und zweiten Füllstrahls können sich unterscheiden, ohne dass diese durch zwei seperate Füllventile erzeugt werden müssen.

Die für den ersten Füllprozess, insbesondere die Freistrahlabfüllung, produktführenden Komponenten, umfassend die erste Produktleitung 34 und den ersten Produktauslauf 53a, werden hierin auch gemeinsam als erster Produktweg W1 bezeichnet. Die für den zweiten Füllprozess, insbesondere die Wandabfüllung, produktführenden Komponenten, umfassend die zweite Produktleitung 35 mit den Mantelkanälen 53a, 53b und den zweiten Produktauslauf 53b, werden hierin auch gemeinsam als zweiter Produktweg W2 bezeichnet.

Eine Anschlussmöglichkeit des Füllorgans 10 in einer Abfüllanlage geht aus der schematischen Darstellung von Fluidwegen, Ventilen sowie eines Reservoirs der Figur 1 hervor.

Gemäß diesem Ausführungsbeispiel wird das Füllprodukt über ein Produktreservoir 110 bereitgestellt. Das Produktreservoir 110 kann in Form eines Zentralkessels oder Ringkessels vorgesehen sein, der mehrere Füllorgane 10, beispielsweise angeordnet am Umfang eines Füllerkarussells, mit dem Füllprodukt versorgt. Zu diesem Zweck wird das Füllprodukt vom Produktreservoir 110 über die erste (vgl. Figur 2) und zweite Produktzuleitung 131, 132 an das Füllorgan 10 geleitet. Die erste und zweite Produktzuleitung 131, 132 können von einer gemeinsamen Produktzuleitung 130, die an das Produktreservoir 110 angebunden ist, abzweigen.

Zumindest die zweite Produktzuleitung 132 umfasst ein Schaltventil 111, um die Zuleitung des Füllprodukts zum zweiten Produktweg W2 zu- beziehungsweise abzuschalten. Alternativ oder zusätzlich kann ein Regelventil vorgesehen sein, um den Volumenstrom des Füllprodukts zum Füllorgan 10 zu regeln. In der Figur 2 ist eine weitere Ausführungsform gezeigt, in der das Schaltventil 111 den Füllproduktstrom von der gemeinsamen Produktzuleitung 130 in die erste Produktzuleitung 131 oder zweite Produktzuleitung 132 schalten kann, zusätzlich oder alternativ zu einer vollständigen Absperrung des Zustroms. In der Produktzuleitung 131, 132 oder der gemeinsamen Produktzuleitung 130 kann ferner ein Durchflussmesser 112, vorzugsweise stromaufwärts des Schaltventils 111, angeordnet sein, um den passierenden Volumenstrom zu messen.

Im Ausführungsbeispiel der Figur 1 ist ferner eine Belüftungsleitung 113 mit einem Belüftungsventil 114 vorgesehen, die genutzt werden können, um bei Füllende durch Öffnen des Belüftungsventils 114 die Leitungen und Kanäle leerlaufen zu lassen.

Ferner ist der Kopfraum 110a des Produktreservoirs 110 über ein Schaltventil 115 mit der Gasleitung 133 verbunden. Auf diese Weise kann das Gas im Kopfraum 110a des Produktreservoirs 110 als Spanngas verwendet und über den Gaskanal 36a in den Behälter eingeleitet werden. Die Gasleitung 133 ist zudem über ein Schaltventil 116 mit der Umgebung verbunden, wodurch der Behälter auf Umgebungsdruck entspannt werden kann.

Im Weiteren werden die Funktionsweise und die beiden Füllmodi des Füllorgans 10 genauer beschrieben, wobei beispielhaft angenommen wird, dass der erste Füllstrahl für die Abfüllung stiller, d.h. nicht-karbonisierter Füllprodukte im Freistrahl und der zweite Füllstrahl für die Abfüllung karbonisierter Füllprodukte als Wandabfüllung vorgesehen sind.

Für die Abfüllung karbonisierter Produkte wird die Behältermündung des zu befüllenden Behälters gasdicht gegen den Mündungsabschnitt 54 des Füllorgans 10 angepresst. Dies kann durch Anheben des Behälters, Absenken des Füllorgans 10 oder eine Kombination aus beiden Hubbewegungen erfolgen.

Anschließend wird der Behälter durch Öffnen des Schaltventils 115 mit einem Spanngas, beispielsweise CO₂, vorgespannt. Hierbei findet ein Druckausgleich zwischen dem Behälter und dem Kopfraum 110a des Produktreservoirs 110 statt.

Nach Beendigung des Vorspannens und Schließen des Schaltventils 115 kann der eigentliche Füllvorgang beginnen. Hierfür wird das Schaltventil 111 für die zweite Produktzuleitung 132 geöffnet, wodurch das Füllprodukt aus dem Produktreservoir 110 in die zweite Produktleitung 35 und die Mantelkanäle 35a, 35b fließt. Das Füllprodukt wird über die Mantelkanäle 35a, 35b und deren Drallkontur 55 in Rotation versetzt, bevor es über den zweiten Produktauslauf 53b in den Mündungsabschnitt 54 unterhalb der Auslaufkontur des Freistrahlventils und anschließend in den Behälter geleitet wird, wo es an der Innenwand herabfließt. Das dabei verdrängte Rückgas im Behälter wird über den Gaskanal 36a im Ventilkegel 51 und der Ventilstange 36 sowie die Gasleitung 133 in das Produktreservoir 110 zurückgeführt.

Bei Füllende wird das Belüftungsventil 114 geöffnet, sodass die Kanäle leerlaufen können. Danach kann der Behälter über das Schaltventil 116 auf Umgebungsdruck entspannt und anschließend abtransportiert werden.

Für die Abfüllung nicht-karbonisierter Produkte wird der Behälter unterhalb des Mündungsabschnitts 54 platziert, ohne dass hierbei eine gasdichte Verbindung mit der Behältermündung vorliegen muss. Das Füllprodukt fließt durch Anheben des Ventilkegels 51 aus dem Produktreservoir 110, über die erste Produktzuleitung 131, die erste Produktleitung 34 und den ersten Produktauslauf 53a als Freistrahl in den Behälter. Gegebenenfalls ist das Schaltventil 111 entsprechend zu schalten, so dass der erste Produktweg W1 geöffnet und der zweite Produktweg W2 geschlossen ist. Allerdings ist ein Schaltventil 111 für den ersten Produktweg W1 nicht unbedingt erforderlich, da der Durchfluss über den Ventilkegel 51 geregelt wird.

Die räumliche Trennung der produktberührten Bereiche für die Freistrahl- und die Wandabfüllung, vor allem im Hinblick auf die Auslaufkonturen, ermöglicht die Verwendung jeweils optimaler Geometrien, ohne qualitätsmindernde Kompromisse eingehen zu müssen.

Die vorstehend dargelegten Ausführungsbeispiele können optional dadurch abgewandelt werden, dass alternativ oder zusätzlich zur Absperrung und Belüftung vor dem Füllorgan 10 in der zweiten Produktzuleitung 132 eine Absperrung 53c am zweiten Produktauslauf 53b erfolgt. Die optionale Absperrung 53c ist schematisch in der Figur 1 dargestellt. Hierzu sind verschiedene Lösungen möglich: So kann die Absperrung 53c am zweiten Produktauslauf 53b mittels Klappen realisiert werden, die bei Füllende vom Gehäuse 20 des Füllorgans 10 eingeklappt werden und den zweiten Produktauslauf 53b verschließen. Alternativ sind auch ein Anpressen einer Dichtfläche gegen den zweiten Produktauslauf 53b oder eine mit einem flexiblen Material ummantelte Zentralblende auf Höhe des zweiten Produktauslaufs 53b realisierbar. Alternativ könnte eine verschiebbare Auslaufhülse die Abdichtung am unteren Ende des Füllorgans 10 übernehmen.

Vorteilhaft bei diesen Varianten ist, dass das Leerlaufen nach Füllende sowie die Verzugszeit zwischen dem Öffnen des Absperrventils 111 und Eintritt des Füllprodukts in den Behälter verbessert werden. Erfolgt die Abdichtung wie hier beschrieben erst unten am zweiten Produktauslauf 53b, ist es ferner nicht notwendig, außerhalb des Füllorgans 10 eine Belüftung vorzusehen.

Eine Absperrung 53c am zweiten Produktauslauf 53b erlaubt zudem eine Modifikation der Mantelkanäle 35a, 35b dahingehend, dass diese durch einen vollvolumigen, weniger verästelten Raum in der Ventilwand ersetzt werden können. Der Drall kann durch Lamellen ersetzt werden, da im Fall einer Absperrung 53c am zweiten Produktauslauf 53b die Äquivalenz der Gesamtquerschnittsfläche entfällt. Auch aus hygienischer Sicht ist eine solche Modifikation vorteilhaft, da ein Vollvolumen leichter zu überwachen ist und die Wahrscheinlichkeit für Verstopfungen in einer großen Querschnittsfläche geringer ist als in einzelnen, beispielsweise vier Kanälen. Das Nachtropfverhalten ist verbessert, da die benetzte Fläche unterhalb der Absperrung 53c hierbei geringer ist als bei einer Absperrung vor dem Füllorgan 10.

Füllorgane 10 der vorstehenden Beschreibung erlauben sowohl eine Wandabfüllung, insbesondere für karbonisierte Füllprodukte, als auch eine aseptische Abfüllung und/oder Freistrahlabfüllung, insbesondere für stille Füllprodukte. Eine Grundidee besteht darin, die Ventilwand des Freistrahlabfüllventils beziehungsweise Füllorgans 10 für Kanäle zu nutzen, in denen karbonisierte Produkte in Rotation versetzt und mit Drall abgefüllt werden können. Somit kann das Füllorgan 10 die beiden Prozesse kombinieren, ohne dass sich die Produktwege kreuzen.

Der Produktwechsel ist schnell und einfach durchführbar, wodurch die Produktion schnell auf Kundenwünsche oder eine Änderung der Marktlage reagieren kann. Besonders im Fall geringer Abfüllmengen müssen nun nicht länger mehrere Abfüllanlagen für karbonisierte und nicht-karbonisierte Füllprodukte beziehungsweise für verschiedene Abfüllarten vorgehalten werden, wodurch sich Ressourcen und Kosten einsparen lassen.

Für das Wandabfüllen verzichtet die hierin dargelegte Konstruktion auf einen Drallkörper, wodurch nicht nur Komponenten eingespart werden, sondern auch der herkömmliche Spalt zwischen Drallkörper und Füllventilinnenwand entfällt. Dadurch kann eine etwaige Keimbildung minimiert werden. Dies gilt gleichermaßen für Komponenten zum Anheben/Absenken eines herkömmlichen Drallkörpers, wodurch weniger Verschleißteile involviert sind und das Füllorgan 10 die Wandabfüllung besonders zuverlässig und wartungsarm durchführen kann.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Füllorgan
- 20: Gehäuse
- 30: Oberer Ventilabschnitt
- 31: Erster Produktanschluss
- 32: Zweiter Produktanschluss
- 33: Gasanschluss
- 34: Erste Produktleitung
- 35: Zweite Produktleitung
- 35a: Mantelkanal
- 35b: Mantelkanal
- 35c: Absperrung
- 36: Ventilstange
- 36a: Gaskanal
- 37: Aktuator
- 37a: Vorspannmittel
- 38: Faltenbalg
- 40: Flanschabschnitt
- 50: Unterer Ventilabschnitt
- 51: Ventilkegel
- 52: Ventilsitz
- 53a: Erster Produktauslauf
- 53b: Zweiter Produktauslauf
- 54: Mündungsabschnitt
- 55: Drallkontur

- 110: Produktreservoir
- 110a: Kopfraum
- 111: Schaltventil
- 112: Durchflussmesser
- 113: Belüftungsleitung
- 114: Belüftungsventil
- 115: Schaltventil
- 116: Schaltventil
- 130: Produktzuleitung
- 131: Erste Produktzuleitung
- 132: Zweite Produktzuleitung
- 133: Gasleitung

- W1: Erster Produktweg
- W2: Zweiter Produktweg

## Patentansprüche

1. Füllorgan (10) zum Befüllen eines Behälters mit einem Füllprodukt, vorzugsweise in einer Getränkeabfüllanlage, wobei das Füllorgan (10) aufweist:
einen ersten Produktweg (W1) mit einem ersten Produktanschluss (31) zur Anbindung an eine erste Produktzuleitung (131), einem ersten Produktauslauf (53a) zum Einleiten des Füllprodukts in den Behälter und einer ersten Produktleitung (34), die den ersten Produktanschluss (31) und den ersten Produktauslauf (53a) in Fluidkommunikation versetzt;
einen zweiten Produktweg (W2) mit einem zweiten Produktanschluss (32) zur Anbindung an eine zweite Produktzuleitung (132), einem zweiten Produktauslauf (53b) zum Einleiten des Füllprodukts in den Behälter und einer zweiten Produktleitung (35), die den zweiten Produktanschluss (32) und den zweiten Produktauslauf (53b) in Fluidkommunikation versetzt; wobei
der erste Produktweg (W1) eingerichtet ist, um das Füllprodukt über den ersten Produktauslauf (53a) in einem ersten Füllproduktstrahl in den Behälter einzuleiten, und der zweite Produktweg (W2) eingerichtet ist, um das Füllprodukt über den zweiten Produktauslauf (53b) in einem zweiten Füllproduktstrahl, der sich vom ersten Füllproduktstrahl unterscheidet, in den Behälter einzuleiten.

2. Füllorgan (10) nach Anspruch 1, **dadurch gekennzeichnet, dass** der erste Produktweg (W1) für eine Freistrahlabfüllung und/oder der zweite Produktweg (W2) für eine Wandabfüllung eingerichtet ist.

3. Füllorgan (10) nach Anspruch 1 oder 2, **dadurch gekennzeichnet, dass** das Füllorgan (10) zumindest einen Gaskanal (36a) aufweist, der für eine Zuleitung eines Spanngases in den Behälter und/oder eine Ableitung eines Gases aus dem Behälter eingerichtet ist.

4. Füllorgan (10) nach einem der vorigen Ansprüche, **dadurch gekennzeichnet, dass** der erste Produktweg (W1) einen beweglichen Ventilkegel (51) sowie einen mit diesem zusammenwirkenden Ventilsitz (52) in der ersten Produktleitung (34) umfasst, wobei der Ventilkegel (51) so über einen Aktuator (37) mit dem Ventilsitz (52) in Kontakt bringbar und von diesem entfernbar ist, dass der erste Produktauslauf (53a) dadurch geschlossen beziehungsweise geöffnet wird.

5. Füllorgan (10) nach Anspruch 3 und 4, **dadurch gekennzeichnet, dass** der Gaskanal (36a) durch den Ventilkegel (51) verläuft, wobei das Füllorgan (10) vorzugsweise eine Ventilstange (36) aufweist, die den Ventilkegel (51) mit dem Aktuator (37) verbindet, und der Gaskanal (36a) ferner durch die Ventilstange (36) verläuft.

6. Füllorgan (10) nach einem der vorigen Ansprüche, **dadurch gekennzeichnet, dass** die erste Produktleitung (34) eine zylindrische Form hat und die zweite Produktleitung (35) radial außerhalb der ersten Produktleitung (34) verläuft, wobei der zweite Produktweg (W2) vorzugsweise eine Drallkontur (55) umfasst, so dass das Füllprodukt des zweiten Produktwegs (W2) beim Einleiten in den Behälter in Rotation versetzt wird.

7. Füllorgan (10) nach Anspruch 6, **dadurch gekennzeichnet, dass** der zweite Produktauslauf (53b) durch einen Ringspalt gebildet wird, der den ersten Produktauslauf (53a), vorzugsweise ebenfalls ein Ringspalt, radial und/oder konzentrisch umgibt.

8. Füllorgan (10) nach Anspruch 6 oder 7, **dadurch gekennzeichnet, dass** die zweite Produktleitung (35) mehrere Mantelkanäle (35a, 35b) umfasst, die radial außerhalb der ersten Produktleitung (34) verlaufen und vorzugsweise von einem gemeinsamen Abschnitt der Produktleitung (35) abzweigen, wobei sich die zweite Produktleitung (35) vorzugsweise in zwei Mantelkanäle (35a) aufteilt, die sich wiederum in je zwei weitere Mantelkanäle (35b) aufteilen.

9. Füllorgan (10) nach einem der Ansprüche 6 bis 8, **dadurch gekennzeichnet, dass** die erste und zweite Produktleitung (34, 35) nicht in Fluidkommunikation miteinander stehen.

10. Füllorgan (10) nach einem der vorigen Ansprüche, **dadurch gekennzeichnet, dass** am zweiten Produktauslauf (53b) eine Absperrung (53c) vorgesehen ist, die eingerichtet ist, um den zweiten Produktauslauf (53b) bedarfsweise zu öffnen und zu schließen, wobei die Absperrung (53c) vorzugsweise eine oder mehrere Klappen umfasst.

11. Füllorgan (10) nach einem der vorigen Ansprüche, **dadurch gekennzeichnet, dass** das Füllorgan (10) ein Gehäuse (20), vorzugsweise von zylindrischer Form, zur Aufnahme des ersten Produktwegs (W1) und des zweiten Produktwegs (W2) aufweist, wobei der zweite Produktweg (W2) zumindest abschnittsweise in einer Gehäusewand verläuft, an der Gehäusewand verläuft oder durch die Gehäusewand gebildet wird.

12. Füllorgan (10) nach Anspruch 11, **dadurch gekennzeichnet, dass** das Gehäuse (20) zumindest abschnittsweise durch ein 3D-Druckverfahren, vorzugsweise ein selektives Laserschmelzverfahren, hergestellt ist.

13. Füllorgan (10) nach Anspruch 12, **dadurch gekennzeichnet, dass** das Gehäuse (20) einen oberen Ventilabschnitt (30), einen Flanschabschnitt (40) und einen unteren Ventilabschnitt (50) umfasst, wobei der obere Ventilabschnitt (30) und der untere Ventilabschnitt (50) durch ein 3D-Druckverfahren, vorzugsweise ein selektives Laserschmelzverfahren, hergestellt sowie beidseitig auf den Flanschabschnitt (40) additiv aufgebaut sind.

14. Vorrichtung zum Befüllen eines Behälters mit einem Füllprodukt, vorzugsweise in einer Getränkeabfüllanlage, wobei die Vorrichtung aufweist:
zumindest ein Füllorgan (10) nach einem der vorigen Ansprüche;
ein Produktreservoir (110) zur Bereitstellung des Füllprodukts;
einen ersten Produktzulauf (131), der mit dem ersten Produktanschluss (31) des Füllorgans (10) verbunden und eingerichtet ist, um das Füllprodukt aus dem Produktreservoir (110) in den ersten Produktweg (W1) einzuleiten;
einen zweiten Produktzulauf (132), der mit dem zweiten Produktanschluss (32) des Füllorgans (10) verbunden und eingerichtet ist, um das Füllprodukt aus dem Produktreservoir (110) in den zweiten Produktweg (W2) einzuleiten, wobei der zweite Produktzulauf (132) vorzugsweise ein Ventil umfasst, das eingerichtet ist, um die Zuleitung des Füllprodukts in den zweiten Produktweg zu- beziehungsweise abzuschalten.

15. Vorrichtung nach Anspruch 14, **dadurch gekennzeichnet, dass** eine Belüftungsleitung (113) mit einem Belüftungsventil (114) vorgesehen ist, die von der zweiten Produktzuleitung (132) abzweigt.
